# EUROPEAN PATENT APPLICATION

(11) **EP 4 468 507 A1**
(43) Date of publication of application: **27.11.2024**
(21) Application number: 23860657.8
(22) Date of filing: 07.07.2023
(51) Int. Cl.: H01M 50/533, H01M 50/586, H01M 50/54, H01M 50/534, H01M 50/204

(54) **BATTERY CELL, BATTERY MODULE COMPRISING BATTERY CELL, AND BATTERY PACK COMPRISING BATTERY MODULE**

(30) Priority: 31.08.2022 KR 20220110396; 14.11.2022 KR 20220152044
(71) Applicant: LG Energy Solution, Ltd., Seoul 07335 (KR)
(72) Inventor: PARK, Gi-Su, Daejeon 34122 (KR); LEE, Jae-Gil, Daejeon 34122 (KR); SHIN, Dong-Seok, Daejeon 34122 (KR)
(74) Representative: Goddar, Heinz J.
(86) International application number: PCT/KR2023/009702
(87) International publication number: WO 2024/048974

(57) **Abstract**

Provided are a battery cell capable of preventing breakage of electrode tabs protruding from electrodes, preventing a short circuit between the electrode tabs and surrounding electrodes, and reducing resistance between the electrode tabs and the electrode leads, and a battery module and a battery pack including the same. A battery cell according to the present disclosure includes an electrode assembly including electrodes and an electrode tab stacking portion in which electrode tabs protruding from the electrodes are aligned and stacked in a vertical direction; and an electrode lead including a lead coupling portion surrounding at least a portion of the electrode tab stacking portion, wherein the lead coupling portion continuously surrounds and contacts any one of an upper surface of the electrode tab stacking portion, a first side surface connected to the upper surface, a second side surface opposite to the first side surface, and a lower surface opposite to the upper surface, and the other one of the second side surface and the lower surface opposite to the upper surface is exposed.

## Description

### TECHNICAL FIELD

The present disclosure relates to a battery cell, a battery module including the battery cell, and a battery pack including the battery module, and more specifically, to a battery cell with improved electrode lead shape, a battery module and a battery pack. The present application claims priority to Korean Patent Application No. 10-2022-0110396 filed on August 31, 2022 and Korean Patent Application No. 10-2022-0152044 filed on November 14, 2022, the disclosures of which are incorporated herein by reference.

### BACKGROUND ART

Secondary batteries have high applicability according to product groups and electrical characteristics such as high energy density, and thus are commonly applied not only to portable devices but also to electric vehicles (EVs) or hybrid electric vehicles (HEVs) driven by electric power sources. These secondary batteries are attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. For example, the lithium-ion batteries may be formed by applying a positive electrode active material (e.g., lithium composite transition metal oxide) to a positive electrode current collector and a negative electrode active material (e.g., carbon material) to a negative electrode current collector (e.g., copper, stainless steel, aluminum, nickel, carbon, and the like). Recently, lithium-sulfur batteries, which may replace lithium-ion batteries, are attracting attention as next-generation secondary batteries. The lithium-sulfur batteries may have a higher energy density than conventional lithium secondary batteries by using a sulfur-based compound as a positive electrode active material and an alkali metal such as lithium metal as a negative electrode.

Meanwhile, the battery cell includes electrodes (e.g., negative electrodes), and in order to lead the electrodes to the outside of the battery cell, electrode tabs (e.g., negative electrode tabs) protruding from the electrodes are used by being bonded to the electrode lead. Typically, the electrode lead is manufactured in a plate shape and bonded to the electrode tabs on the upper surfaces of the electrode tabs. If the electrodes and the electrode tabs are made of lithium metal with relatively small rigidity, the reliability of the electrode tabs may be problematic in the process of bonding the electrode tabs and the electrode lead by ultrasonic method under pressing. For example, the electrode tabs may be broken in the area where the ultrasonic waves are applied. In addition, the electrode tabs may be pushed out to cause a short circuit with surrounding electrodes (e.g., other adjacent electrode tabs). Therefore, when maintaining the existing structure of the electrode lead and bonding the electrode lead to the electrode tabs, there is a high risk of occurrence of defects during manufacturing secondary batteries such as lithium-sulfur batteries.

### DISCLOSURE

### Technical Problem

The present disclosure is designed to solve the problems of the related art, and therefore the present disclosure is directed to providing a battery cell that may prevent breakage of electrode tabs protruding from electrodes, prevent a short circuit between electrode tabs and surrounding electrodes, and reduce resistance between electrode tabs and electrode leads, and a battery module and a battery pack including the same.

### Technical Solution

A battery cell according to one aspect of the present disclosure for solving the above-described problem may include an electrode assembly including electrodes and an electrode tab stacking portion in which electrode tabs protruding from the electrodes are aligned and stacked in a vertical direction; and an electrode lead including a lead coupling portion surrounding at least a portion of the electrode tab stacking portion, wherein the lead coupling portion may continuously surround and contact any one of an upper surface of the electrode tab stacking portion, a first side surface connected to the upper surface, a second side surface opposite to the first side surface, and a lower surface opposite to the upper surface, and the other one of the second side surface and the lower surface opposite to the upper surface may be exposed.

In one embodiment, the electrode tab stacking portion may have a back surface defined as opposite to the protruding direction of the electrode tabs, wherein the lead coupling portion may expose the back surface of the electrode tab stacking portion.

In one embodiment, a width of the lead coupling portion in a direction perpendicular to the protruding direction of the electrode tabs may be greater than a width of the electrode tab stacking portion in a direction perpendicular to the protruding direction of the electrode tabs.

In one embodiment, a height of the lead coupling portion in the vertical direction may be greater than a height of the electrode tab stacking portion in the vertical direction.

In one embodiment, the electrode lead may further include an extension portion extending from the lead coupling portion to lead the electrode to the outside of the battery cell, wherein a width of the lead coupling portion in a direction perpendicular to the protruding direction of the electrode tabs may be greater than a width of the extension portion in a direction perpendicular to the protruding direction of the electrode tabs.

In one embodiment, the lead coupling portion may be bent at a right angle at a corner portion where a surface of the electrode tab stacking portion is connected to another surface thereof to surround the at least a portion of the electrode tab stacking portion.

In one embodiment, the lead coupling portion may be bent into a curved shape at a corner portion where a surface of the electrode tab stacking portion is connected to another surface thereof to surround at the least a portion of the electrode tab stacking portion.

In one embodiment, the lead coupling portion may have a shape protruding from a side surface of the extension portion.

In one embodiment, a rigidity of the lead coupling portion may be greater than that of the electrode tabs.

In one embodiment, each of the electrode tabs may be made of lithium metal.

In one embodiment, the lead coupling portion may be made of a metal other than lithium metal.

In one embodiment, the electrodes may be negative electrodes, the electrode tabs may be negative electrode tabs and made of lithium metal, and the electrode tab stacking portion may be a negative electrode tab stacking portion, wherein the electrode assembly may further include positive electrodes with a separator interposed between each of the negative electrodes and a positive electrode tab stacking portion in which positive electrode tabs protruding from the positive electrodes are aligned and stacked in the vertical direction, and the positive electrode tabs may be made of a metal other than lithium metal, wherein the negative electrode tab stacking portion and the positive electrode tab stacking portion may be formed parallel to each other on one side of the electrode assembly, and the second side surface or the lower surface of the negative electrode tab stacking portion exposed by the lead coupling portion may not face the positive electrode tab stacking portion.

In one embodiment, a contact portion of the lead coupling portion and the negative electrode tab stacking portion may be compressed so that the negative electrode tab stacking portion may spread while being restrained by the lead coupling portion.

A battery cell according to another aspect of the present disclosure may include an electrode assembly including electrodes and an electrode tab stacking portion in which electrode tabs protruding from the electrodes are aligned and stacked in a vertical direction; and an electrode lead including a lead coupling portion surrounding at least a portion of the electrode tab stacking portion, wherein the lead coupling portion may expose at least one of an upper surface of the electrode tab stacking portion, a first side surface connected to the upper surface, a second side surface opposite to the first side surface, a lower surface opposite to the upper surface, and a back surface connected to the lower surface and opposite to the protruding direction of the electrode tabs.

The lead coupling portion may contact the upper surface, the back surface, and the lower surface, and may expose the first side surface and the second side surface.

The lead coupling portion may contact the upper surface, the first side surface, the second side surface, and the lower surface, and may expose the back surface.

The electrode tab stacking portion may have a center surface further defined as located between the upper surface and the lower surface and parallel to the upper surface and the lower surface, wherein the lead coupling portion may contact the upper surface, the center surface, and the lower surface, and may expose the first side surface, the second side surface, and the back surface.

A battery module and a batter pack of the present disclosure for solving the above-described problem may include a battery cell according to an embodiment of the present disclosure as described above.

### Advantageous Effects

The battery cell according to the present disclosure may include an electrode tab stacking portion in which electrode tabs are aligned and stacked, and an electrode lead connected to the electrode tab stacking portion. The electrode lead includes a lead coupling portion surrounding at least a portion of the electrode tab stacking portion, and for example, the electrode lead may contact the upper surface, first side surface, and second side surface of the electrode tab stacking portion. As the electrode lead with relatively large rigidity is formed to surround the electrode tab stacking portion with relatively small rigidity, the electrode lead may prevent breakage of the electrode tab stacking portion in the process of bonding the electrode lead and the electrode tab stacking portion.

Also, the electrode lead may expose the lower surface and back surface of the electrode tab stacking portion, and the lower surface and back surface of the electrode tab stacking portion may not face the surrounding electrodes. In the process of bonding the electrode lead and the electrode tab stacking portion, the contact portion of the lead coupling portion and the electrode tab stacking portion may be compressed so that the electrode tab stacking portion may spread while being restrained by the lead coupling portion. In other words, the electrode tab stacking portion may be pushed toward the exposed lower surface and back surface, but not toward the upper surface, first side surface, and second side surface covered by the lead coupling portion. Accordingly, a short circuit may not occur between the electrode tab stacking portion and the surrounding electrodes.

In addition, in the battery cell according to another aspect of the present disclosure, the lead coupling portion may expose at least one of the upper surface, first side surface, second side surface, lower surface, and back surface of the electrode tab stacking portion. Compared to the case where conventional electrode leads are bonded to the electrode tabs on the upper surface of the electrode tabs, according to another aspect of the present disclosure, the bonding area is increased.

In this way, since the electrode lead surrounds at least a portion of the electrode tab stacking portion, the safety of bonding between the electrode tab and the electrode lead may be secured, and the bonding area between the electrode tab and the electrode lead may be increased, thereby improving bonding strength and reducing contact resistance. Since the form in which the electrode lead surrounds at least a portion of the electrode tab stacking portion may be maintained during use, there is an effect of facilitating current movement by maintaining improved bonding strength.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a plan view for describing a battery cell according to an embodiment of the present disclosure.
FIG. 2 is a perspective view for describing an example of a first electrode lead included in the battery cell of FIG. 1.
FIG. 3 is a cross-sectional view taken along line A-A' in FIG. 1.
FIG. 4 is a cross-sectional view taken along line B-B' in FIG. 1.
FIG. 5 is a cross-sectional view taken along line C-C' in FIG. 1.
FIGS. 6 to 8 are perspective views for describing an example of a method of manufacturing the battery cell of FIG. 1.
FIGS. 9 and 10 are perspective views for describing another example of a method of manufacturing the battery cell of FIG. 1.
FIG. 11 is a perspective view for describing another example of a first electrode lead included in the battery cell of FIG. 1.
FIG. 12 is a plan view for describing a battery cell according to another embodiment of the present disclosure.
FIG. 13 is a perspective view for describing an example of a first electrode lead included in the battery cell of FIG. 12.
FIG. 14 is a perspective view for describing a first electrode lead included in a battery cell according to still another embodiment of the present disclosure.
FIG. 15 is a perspective view for describing a first electrode lead included in a battery cell according to still another embodiment of the present disclosure.
FIG. 16 is a perspective view for describing a first electrode lead included in a battery cell according to still another embodiment of the present disclosure.
FIG. 17 is a view for describing a battery module including a battery cell according to an embodiment of the present disclosure.
FIG. 18 is a view for describing a battery pack including the battery module of FIG. 17.

### BEST MODE

The present disclosure will become more apparent by describing preferred embodiments of the present disclosure in detail with reference to the accompanying drawings. The embodiments described herein are shown by way of example to help understanding of the present disclosure, and it should be understood that the present disclosure may be variously modified and implemented differently from the embodiments described herein. In addition, to help understanding of the present disclosure, the accompanying drawings are not illustrated on an actual scale, but the dimensions of some components may be exaggerated.

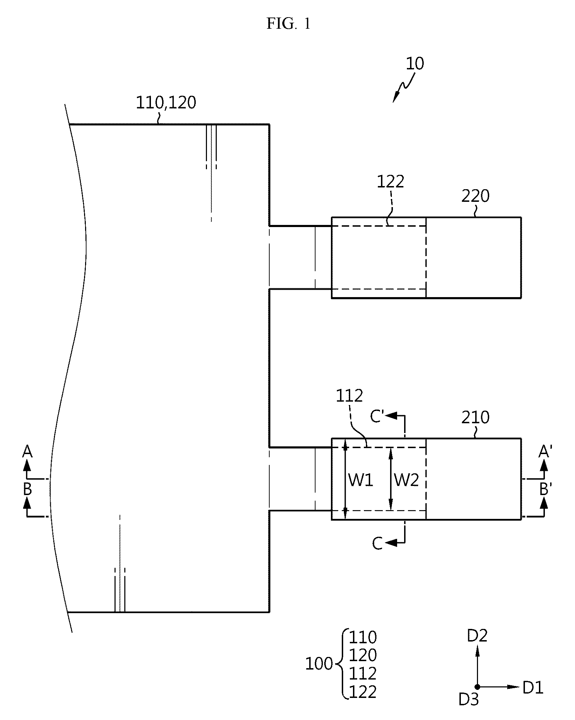

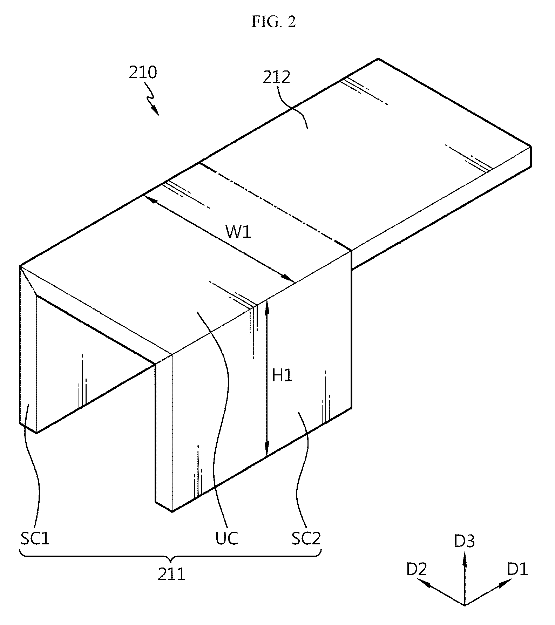

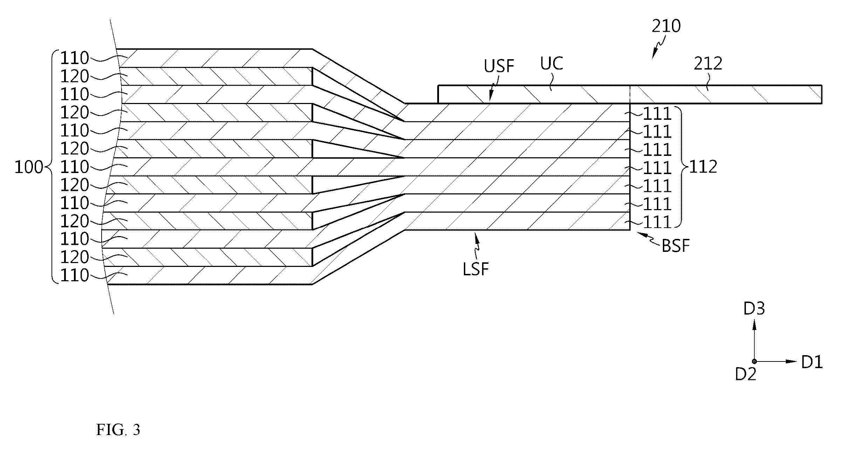

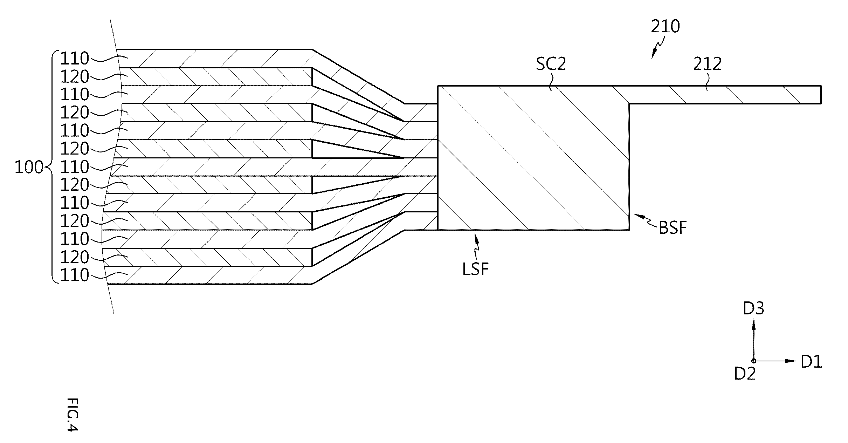

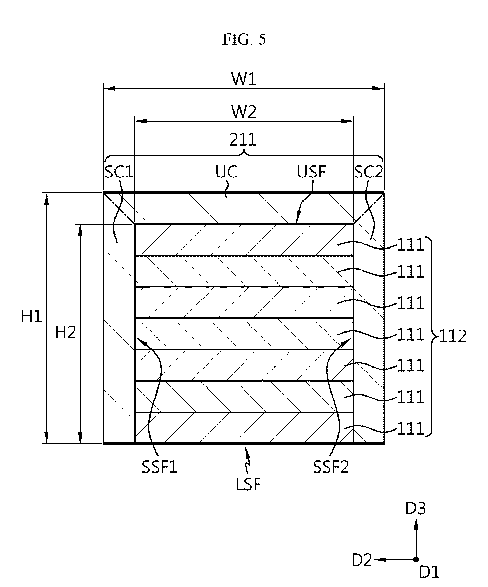

FIG. 1 is a plan view for describing a battery cell according to an embodiment of the present disclosure. FIG. 2 is a perspective view for describing an example of a first electrode lead included in the battery cell of FIG. 1. FIG. 3 is a cross-sectional view taken along line A-A' in FIG. 1. FIG. 4 is a cross-sectional view taken along line B-B' in FIG. 1. FIG. 5 is a cross-sectional view taken along line C-C' in FIG. 1.

First, referring to FIG. 1, the battery cell 10 according to an embodiment of the present disclosure may include an electrode assembly 100, a first electrode lead 210, and a second electrode lead 220.

The electrode assembly 100 may include negative electrodes 110, positive electrodes 120, separators, a negative electrode tab stacking portion 112, and a positive electrode tab stacking portion 122.

In one embodiment, the negative electrodes 110 and the positive electrodes 120 may be disposed alternately with each other as shown in FIGS. 3 and 4. For example, the positive electrodes 120 may be disposed between the negative electrodes 110. Also, the separators may be interposed between the positive electrodes 120 and the negative electrodes 110. Accordingly, the electrode assembly 100 may be a stacked electrode assembly or a stacked/folded electrode assembly. For example, the stacked electrode assembly may have a structure in which positive electrodes and negative electrodes cut into units of a predetermined size are sequentially stacked with a separator interposed therebetween, and the stacked/folded electrode assembly may have a structure of winding bi-cells or full-cells in which positive electrodes and negative electrodes of predetermined units are stacked with a separator interposed therebetween.

In one embodiment, referring to FIG. 3, the negative electrode tabs 111 may protrude from the negative electrodes 110 in a first direction D1 (e.g., a protrusion direction). In addition, the negative electrode tabs 111 may be stacked in a third direction D3 (e.g., a vertical direction). The negative electrode tab stacking portion 112 may refer to a configuration in which the negative electrode tabs 111 are aligned and stacked.

In one embodiment, the positive electrode tabs may protrude from the positive electrodes 120 in the first direction D1. In addition, the positive electrode tabs may be stacked in the third direction D3. The positive electrode tab stacking portion 122 may refer to a configuration in which the positive electrode tabs are aligned and stacked.

In one embodiment, as shown in FIG. 1, the negative electrode tab stacking portion 112 and the positive electrode tab stacking portion 122 may be formed parallel to each other on one side of the electrode assembly 100. In addition, the negative electrode tab stacking portion 112 and the positive electrode tab stacking portion 122 may be formed to be spaced apart from each other. Accordingly, the first electrode lead 210 and the second electrode lead 220 may be disposed to be spaced apart from each other.

In one embodiment, the negative electrodes 110 and the negative electrode tabs 111 may be made of an alkali metal such as lithium metal. For example, the electrode assembly 100 may be an electrode assembly for implementing a lithium-sulfur battery, and a positive electrode active material containing a sulfur compound may be applied to the positive electrodes 120.

The first electrode lead 210 may be electrically connected to the electrode assembly 100 through the negative electrode tab stacking portion 112. For example, the first electrode lead 210 may be bonded to the negative electrode tab stacking portion 112. The first electrode lead 210 may be bonded to the negative electrode tab stacking portion 112 through a known bonding method. For example, the first electrode lead 210 may be bonded to the negative electrode tab stacking portion 112 through a pressure bonding method, an ultrasonic bonding method, a resistance bonding method, a laser bonding method, or the like. Accordingly, the first electrode lead 210 may contact the negative electrode tab stacking portion 112 and lead the negative electrodes 110 to the outside of the battery cell 10. In this way, the first electrode lead 210 may be a negative electrode lead.

The second electrode lead 220 may be electrically connected to the electrode assembly 100 through the positive electrode tab stacking portion 122. For example, the second electrode lead 220 may be bonded to the positive electrode tab stacking portion 122. In this way, the second electrode lead 220 may be a positive electrode lead.

In one embodiment, the rigidity of the first electrode lead 210 may be greater than that of the negative electrode tabs 111. For example, the negative electrode tabs 111 may be made of lithium metal, and the first electrode lead 210 may be made of a metal other than lithium metal (e.g., silver, copper, gold, aluminum, tungsten, zinc, nickel, pure iron, steel, platinum, tin, lead, nichrome, brass, bronze, or the like). When the first electrode lead 210 is made of a metal other than lithium metal, the soft nature of lithium metal may be complemented to compensate for the properties of the negative electrode tabs 111, which may be made of lithium metal.

The battery cell 10 according to an embodiment of the present disclosure includes a particularly improved first electrode lead 210. The first electrode lead 210 will be described in more detail with reference to FIGS. 2 to 5.

Referring to FIGS. 2 to 5, the first electrode lead 210 may include a first lead coupling portion 211 and a first extension portion 212. The first lead coupling portion 211 may be formed to surround at least a portion of the negative electrode tab stacking portion 112, thereby being in contact with the negative electrode tab stacking portion 112. The first lead coupling portion 211 may be protruded from a side surface of the first extension portion 212. The first extension portion 212 may extend from the first lead coupling portion 211 to lead the negative electrodes 110 to the outside of the battery cell 10.

In one embodiment, the first lead coupling portion 211 may include an upper contact portion UC, a first side contact portion SC1, and a second side contact portion SC2.

The upper contact portion UC may contact the upper surface USF of the negative electrode tab stacking portion 112. The first side contact portion SC1 may contact the first side surface SSF1 of the negative electrode tab stacking portion 112. The second side contact portion SC2 may contact the second side surface SSF2 of the negative electrode tab stacking portion 112.

For example, the first side surface SSF 1 may be connected to the upper surface USF, and the second side surface SSF2 may be connected to the upper surface USF and be opposite to the first side surface SSF1. Accordingly, the first lead coupling portion 211 may contact the negative electrode tab stacking portion 112 while continuously surrounding the upper surface USF, the first side surface SSF1, and the second side surface SSF2.

In one embodiment, the first lead coupling portion 211 may be bent at a right angle at a corner portion where a surface of the negative electrode tab stacking portion 112 are connected to another surface thereof to surround the at least a portion of the negative electrode tab stacking portion 112. For example, the first lead coupling portion 211 may be bent at a right angle at a corner portion where the upper surface USF and the first side surface SSF1 of the negative electrode tab stacking portion 112 are connected (e.g., a portion where the upper contact portion UC and the first side contact portion SC1 are connected). In addition, the first lead coupling portion 211 may be bent at a right angle at a corner portion where the upper surface USF and the second side surface SSF2 of the negative electrode tab stacking portion 112 are connected (e.g., a portion where the upper contact portion UC and the second side contact portion SC2 are connected).

In one embodiment, the first lead coupling portion 211 may have a first width W1 in a direction perpendicular to the protruding direction of the negative electrode tabs 111 (e.g., a second direction D2), and the negative electrode tab stacking portion 112 may have a second width W2 in a direction perpendicular to the protruding direction of the negative electrode tabs 111 (e.g., a second direction D2). In this case, the first width W1 may be greater than the second width W2, and accordingly, the first lead coupling portion 211 may sufficiently surround the negative electrode tab stacking portion 112 (W1 > W2).

In addition, the width of the first extension portion 212 may be the same as the width of the first lead coupling portion 211 and may be greater than the width of the negative electrode tab stacking portion 112.

In one embodiment, the first lead coupling portion 211 may have a first height H1 in the vertical direction (e.g., the third direction D3), and the negative electrode tab stacking portion 112 may have a second height H2 in the vertical direction (e.g., the third direction D3). In this case, the first height H1 may be greater than the second height H2, and accordingly, the first lead coupling portion 211 may sufficiently surround the negative electrode tab stacking portion 112.

In addition, the first lead coupling portion 211 may expose the lower surface LSF and the back surface BSF of the negative electrode tab stacking portion 112. For example, the lower surface LSF is opposite to the upper surface USF and may be connected to the first and second side surfaces SSF1, SSF2. The back surface BSF may be opposite to the protruding direction (e.g., the first direction D1) of the negative electrode tabs 111.

The first extension portion 212 may extend from the first lead coupling portion 211. The first extension portion 212 may lead the negative electrodes 110 to the outside of the battery cell 10. In one embodiment, as shown in FIG. 2, the first extension portion 212 may extend from the top of the first lead coupling portion 211. For example, the first extension portion 212 may be formed integrally with the first lead coupling portion 211. However, the present disclosure is not limited to this, and the first extension portion 212 may extend from the middle or bottom of the first lead coupling portion 211.

The battery cell 10 may include a negative electrode tab stacking portion 112 in which negative electrode tabs 111 are aligned and stacked, and a first electrode lead 210 connected to the negative electrode tab stacking portion 112. The first electrode lead 210 may surround at least a portion of the negative electrode tab stacking portion 112, and to this end, the first electrode lead 210 may include the upper contact portion UC, the first side contact portion SC1, and the second side contact portion SC2. As the first electrode lead 210 with relatively large rigidity is formed to surround the negative electrode tab stacking portion 112 with relatively small rigidity, the first electrode lead 210 may prevent breakage of the negative electrode tab stacking portion 112 in the process of bonding the first electrode lead 210 and the negative electrode tab stacking portion 112.

In addition, the first electrode lead 210 may expose the lower surface LSF and the back surface BSF of the negative electrode tab stacking portion 112, and the lower surface LSF and the back surface BSF of the negative electrode tab stacking portion 112 may not face the positive electrode tab stacking portion 122. In the process of bonding the first electrode lead 210 and the negative electrode tab stacking portion 112, the contact portion of the first lead coupling portion 211 and the negative electrode tab stacking portion 112 is compressed so that the negative electrode tab stacking portion 112 may spread while being restrained by the first lead coupling portion 211. In other words, the negative electrode tab stacking portion 112 may be pushed toward the exposed lower surface LSF and back surface BSF, but not toward the upper surface USF, the first side surface SSF1, and the second side surface SSF2 covered by the first lead coupling portion 211. Accordingly, a short circuit may not occur between the negative electrode tab stacking portion 112 and the surrounding electrodes (e.g., the positive electrode tab stacking portion 122).

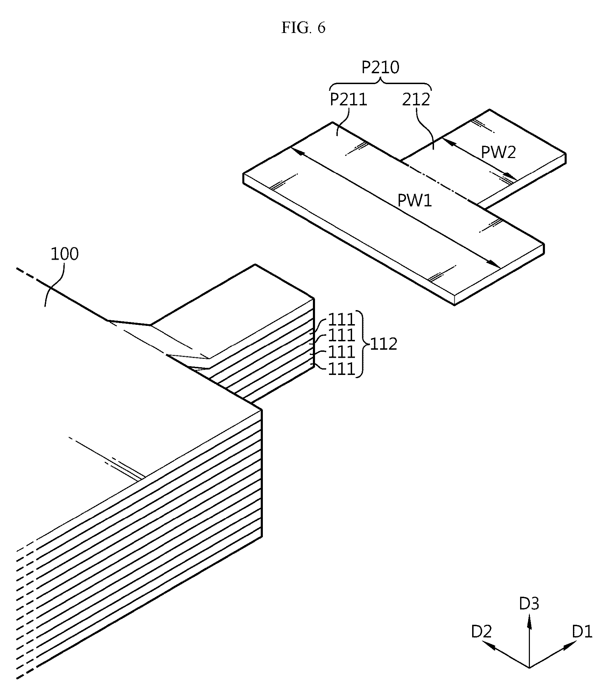

FIGS. 6 to 8 are perspective views for describing an example of a method of manufacturing the battery cell of FIG. 1.

Referring to FIG. 6, a preliminary first electrode lead P210 may include a preliminary first lead coupling portion P211 and a first extension portion 212. The preliminary first lead coupling portion P211 may be a spare member for forming the above-described first lead coupling portion 211, and may be flat to be parallel to a plane formed in the first direction D1 and the second direction D2. The first extension portion 212 may extend from the preliminary first lead coupling portion P211 in the plane. In this case, the width PW1 of the preliminary first lead coupling portion P211 may be greater than the width PW2 of the first extension portion 212.

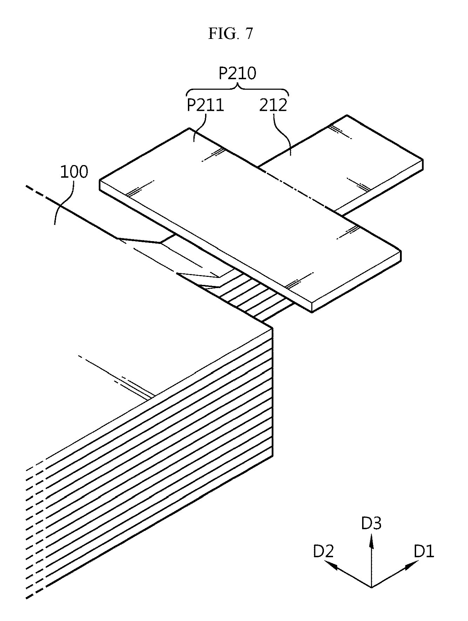

Referring to FIG. 7, the preliminary first electrode lead P210 and the negative electrode tab stacking portion 112 may approach each other, and a portion of the preliminary first lead coupling portion P211 may contact the negative electrode tab stacking portion 112. For example, the portion of the preliminary first lead coupling portion P211 may contact a negative electrode tab located at the uppermost of the negative electrode tabs 111 aligned on the negative electrode tab stacking portion 112.

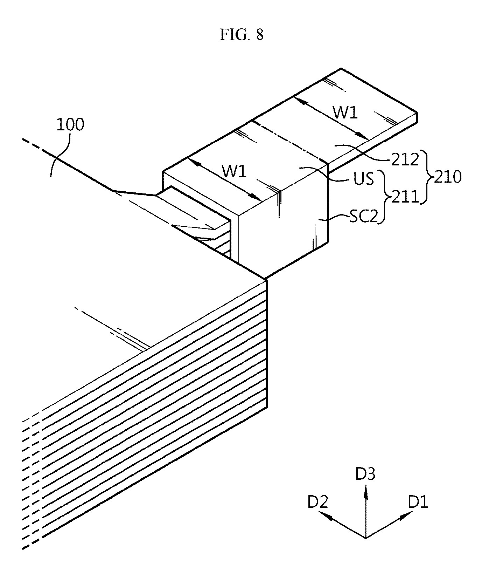

Referring to FIG. 8, the preliminary first lead coupling portion P211 may be bent to correspond to the shape of the negative electrode tab stacking portion 112. For example, the preliminary first lead coupling portion P211 may be bent and bonded to the negative electrode tab stacking portion 112 through any one of the bonding methods described above. Accordingly, the first lead coupling portion 211 may be formed to surround at least a portion of the negative electrode tab stacking portion 112.

According to the manufacturing method described above with reference to FIGS. 6 to 8, the flat preliminary first lead coupling portion P211 may be brought into contact with the negative electrode tab stacking portion 112, and then be bent to correspond to the shape of the negative electrode tab stacking portion 112 to form the first lead coupling portion 211. Accordingly, the contact area between the first lead coupling portion 211 and the negative electrode tab stacking portion 112 may be increased, so that the electrical resistance between the first lead coupling portion 211 and the negative electrode tab stacking portion 112 may be reduced. In addition, the negative electrode tabs 111 may be pushed to the lower surface LSF and/or back surface BSF of the negative electrode tab stacking portion 112 that are not facing the surrounding electrodes, whereby a short circuit may not occur between the negative electrode tab stacking portion 112 and the surrounding electrodes (e.g., the positive electrode tab stacking portion 122).

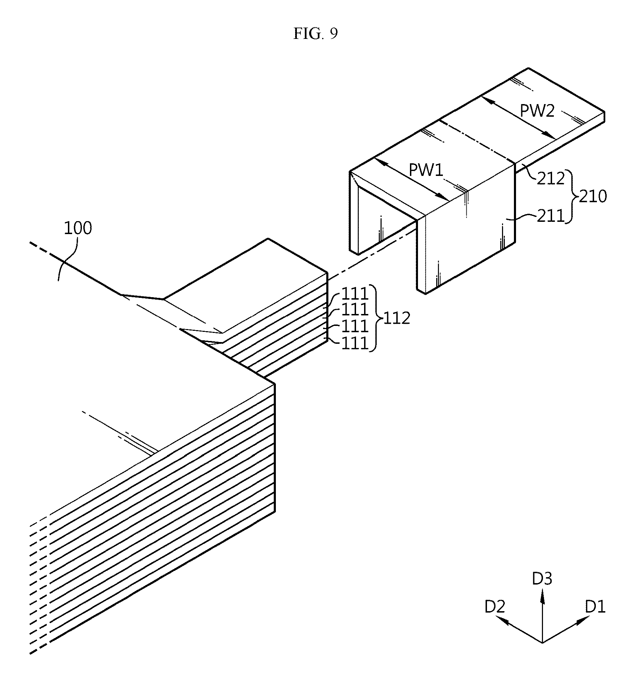

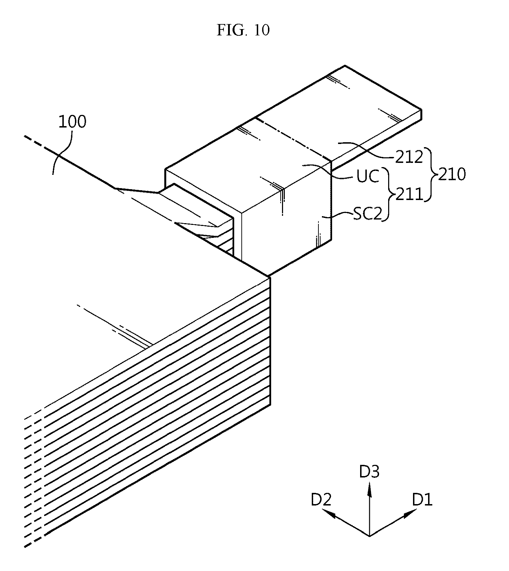

FIGS. 9 and 10 are perspective views for describing another example of a method of manufacturing the battery cell of FIG. 1.

Referring to FIG. 9, a first electrode lead 210 may include a first lead coupling portion 211 and a first extension portion 212. The first lead coupling portion 211 and the first extension portion 212 may be the first lead coupling portion 211 and the first extension portion 212 described above with reference to FIG. 2. In other words, the first electrode lead 210 may be formed in advance to surround at least a portion of the negative electrode tab stacking portion 112, corresponding to the shape of the negative electrode tab stacking portion 112. In this case, the width PW1 of the first lead coupling portion 211 may be substantially the same as the width PW2 of the first extension portion 212.

Referring to FIG. 10, the first electrode lead 210 and the negative electrode tab stacking portion 112 approach each other and are pressed, so that the upper contact portion UC, the first side contact portion SC1, and the second side contact portion SC2 of the first lead coupling portion 211 may be in contact with the negative electrode tab stacking portion 112.

According to the manufacturing method described above with reference to FIGS. 9 and 10, the first electrode lead 210 may be formed in advance corresponding to the shape of the negative electrode tab stacking portion 112. Accordingly, productivity of the bonding process of the first electrode lead 210 and the negative electrode tab stacking portion 112 may be improved, and the pushing phenomenon of the negative electrode tabs 111 may be relatively reduced.

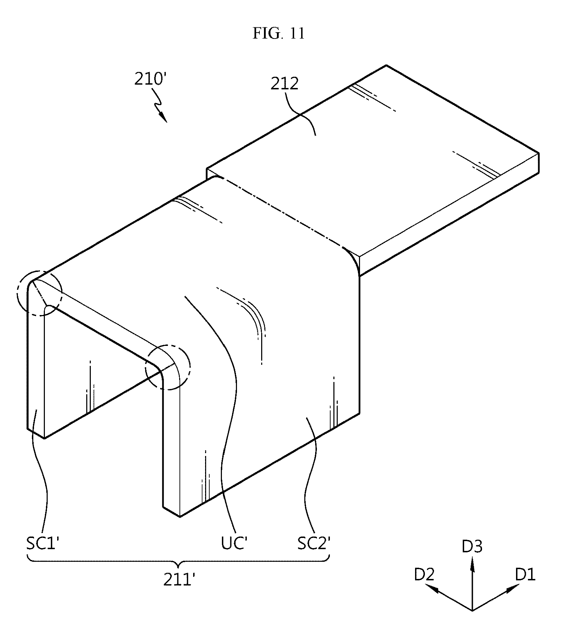

FIG. 11 is a perspective view for describing another example of a first electrode lead included in the battery cell of FIG. 1.

Referring to FIG. 11, the first electrode lead 210' may include a first lead coupling portion 211' and a first extension portion 212. The first lead coupling portion 211' may include an upper contact portion UC', a first side contact portion SC1', and a second side contact portion SC2'. However, the first electrode lead 210' may have substantially the same shape as the first electrode lead 210 described above with reference to FIG. 2, except for the shape of the corner portion to be described later.

In one embodiment, the first lead coupling portion 211' may be bent into a curved surface at a corner portion where a surface of the negative electrode tab stacking portion 112 is connected to another surface thereof to cover the at least a portion of the negative electrode tab stacking portion 112. For example, the first lead coupling portion 211' may be bent into a curved surface at a corner portion (e.g., a portion where the upper contact portion UC' and the first side contact portion SC1' are connected) where the upper surface USF and the first side surface SSF1 of the negative electrode tab stacking portion 112 are connected. In addition, the first lead coupling portion 211' may be bent into a curved surface at a corner portion (e.g., a portion where the upper contact portion UC' and the second side contact portion SC2' are connected) where the upper surface USF and the second side surface SSF2 of the negative electrode tab stacking portion 112 are connected. If bent into a curved surface at a corner portion where a surface of the negative electrode tab stacking portion 112 is connected to another surface thereof, stress concentration at the bent portion may be prevented compared to the case of being bent at a right angle, and the risk of disconnection or breakage due to physical impact or fatigue accumulation during continued use or handling may be reduced.

However, the shape of the first lead coupling portion 211', such as a shape in which the first lead coupling portion 211' is bent at an acute angle and/or an obtuse angle, is not limited to the above.

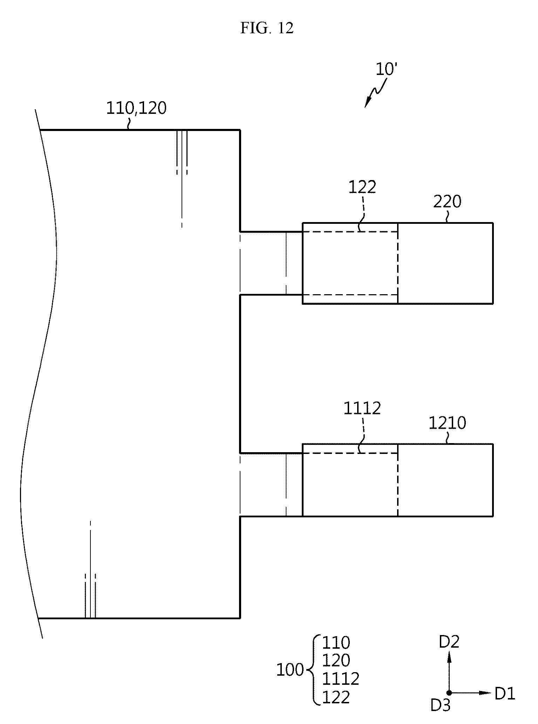

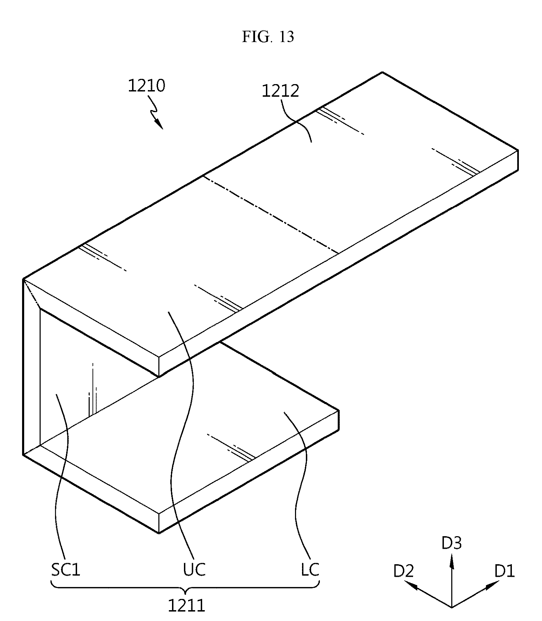

FIG. 12 is a plan view for describing a battery cell according to another embodiment of the present disclosure, and FIG. 13 is a perspective view for describing an example of a first electrode lead included in the battery cell of FIG. 12.

Referring to FIG. 12, a battery cell 10' according to another embodiment of the present disclosure may include an electrode assembly 100, a first electrode lead 1210, and a second electrode lead 220. However, the battery cell 10' may be substantially the same as the battery cell 10 described with reference to FIG. 1, except for the first electrode lead 1210.

Referring to FIG. 13, the first electrode lead 1210 may include a first lead coupling portion 1211 and a first extension portion 1212. The first lead coupling portion 1211 may be formed to surround at least a portion of the negative electrode tab stacking portion 112, thereby contacting the negative electrode tab stacking portion 112. The first lead coupling portion 1211 may have a shape protruding from the side surface of the first extension portion 1212. The first extension portion 1212 may extend from the first lead coupling portion 1211 to lead the negative electrodes 110 to the outside of the battery cell 10'.

In one embodiment, the first lead coupling portion 1211 may include an upper contact portion UC, a first side contact portion SC1, and a lower contact portion LC.

The upper contact portion UC may contact the upper surface USF of the negative electrode tab stacking portion 112. The first side contact portion SC1 may contact the first side surface SSF1 of the negative electrode tab stacking portion 112. The lower contact portion LC may contact the lower surface LSF of the negative electrode tab stacking portion 112.

For example, the first side surface SSF 1 may be connected to the upper surface USF, and the lower surface LSF may be connected to the first side surface SSF1 and be opposite to the upper surface USF. Accordingly, the first lead coupling portion 1211 may contact the negative electrode tab stacking portion 112 while continuously surrounding the upper surface USF, the first side surface SSF1, and the lower surface LSF.

In addition, the first lead coupling portion 1211 may expose a second side surface SSF2 and a back surface BSF of the negative electrode tab stacking portion 112. In this case, the second side surface SSF2 and the back surface BSF of the negative electrode tab stacking portion 112 exposed by the first lead coupling portion 1211 may not face the positive electrode tab stacking portion 122.

The battery cell 10' may include a negative electrode tab stacking portion 112 in which negative electrode tabs 111 are aligned and stacked, and a first electrode lead 1210 connected to the negative electrode tab stacking portion 112. The first electrode lead 1210 may surround at least a portion of the negative electrode tab stacking portion 112, and to this end, the first electrode lead 1210 may include an upper contact portion UC, a first side contact portion SC1, and a lower contact portion LC. As the first electrode lead 1210 with relatively large rigidity is formed to surround the negative electrode tab stacking portion 112 with relatively small rigidity, the first electrode lead 1210 may prevent breakage of the negative electrode tab stacking portion 112 in the process of bonding the first electrode lead 1210 and the negative electrode tab stacking portion 112.

In addition, the first electrode lead 1210 may expose the second side surface SSF2 and the back surface BSF of the negative electrode tab stacking portion 112, and the second side surface SSF2 and the back surface BSF of the negative electrode tab stacking portion 112 may not face the positive electrode tab stacking portion 122. In the process of bonding the first electrode lead 1210 and the negative electrode tab stacking portion 112, the contact portion of the first lead coupling portion 1211 and the negative electrode tab stacking portion 112 is compressed so that the negative electrode tab stacking portion 112 may spread while being restrained by the first lead coupling portion 1211. In other words, the negative electrode tab stacking portion 112 may be pushed toward the exposed second surface SSF2 and the back surface BSF, but not toward the upper surface USF, the first side surface SSF1, and the lower surface LSF covered by the first lead coupling portion 1211. Accordingly, a short circuit may not occur between the negative electrode tab stacking portion 112 and the surrounding electrodes (e.g., the positive electrode tab stacking portion 122).

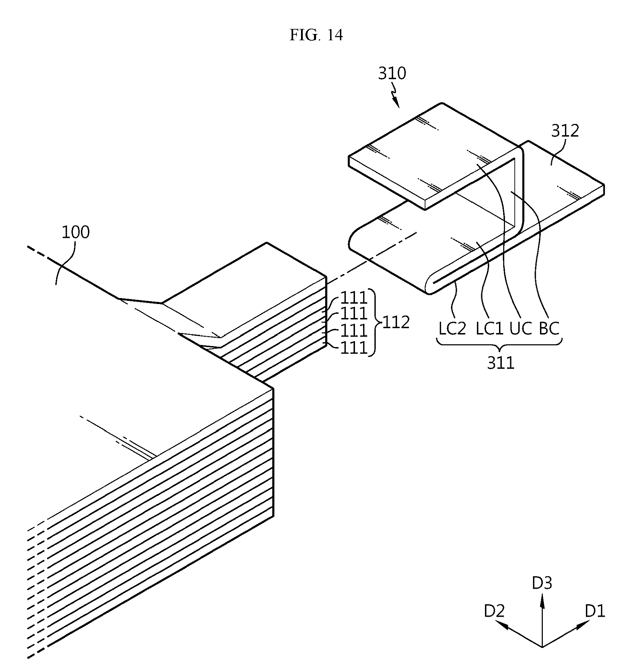

FIG. 14 is a perspective view for describing a first electrode lead included in a battery cell according to still another embodiment of the present disclosure.

Referring to FIG. 14, the first electrode lead 310 may include a first lead coupling portion 311 and a first extension portion 312. The first lead coupling portion 311 may be formed to surround at least a portion of the negative electrode tab stacking portion 112, thereby contacting the negative electrode tab stacking portion 112. The first lead coupling portion 311 may have a shape protruding from the side surface of the first extension portion 312. The first extension portion 312 may extend from the first lead coupling portion 311 to lead the negative electrodes 110 to the outside of the battery cell.

In one embodiment, the first lead coupling portion 311 may include an upper contact portion UC, a back contact portion BC, a first lower contact portion LC1, and a second lower contact portion LC2.

The upper contact portion UC may contact the upper surface USF of the negative electrode tab stacking portion 112. The back contact portion BC may contact the back surface BSF of the negative electrode tab stacking portion 112. The first lower contact portion LC1 may contact the lower surface LSF of the negative electrode tab stacking portion 112. The second lower contact portion LC2 may be in overall contact with the first lower contact portion LC1 and may connect the first lower contact portion LC1 and the first extension portion 312. In other words, the first lead coupling portion 311 may be bent at 180 degrees at the lower surface LSF. Accordingly, rigidity of the first lead coupling portion 311 may be improved.

In addition, the first lead coupling portion 311 may expose a first side surface SSF1 and a second side surface SSF2 of the negative electrode tab stacking portion 112.

In this way, the first lead coupling portion 311 is in contact with the upper surface USF, back surface BSF, and lower surface LSF of the negative electrode tab stacking portion 112, and thus the contact area may increase compared to the conventional bonding area, thereby reducing resistance and maintaining improved bonding strength. Since the first lead coupling portion 311 contacts the upper surface USF, back surface BSF, and lower surface LSF of the negative electrode tab stacking portion 112, breakage of the negative electrode tab stacking portion 112 may be blocked during welding by surrounding at least three surfaces of the negative electrode tab stacking portion 112, thereby ensuring safety of the negative electrode tab.

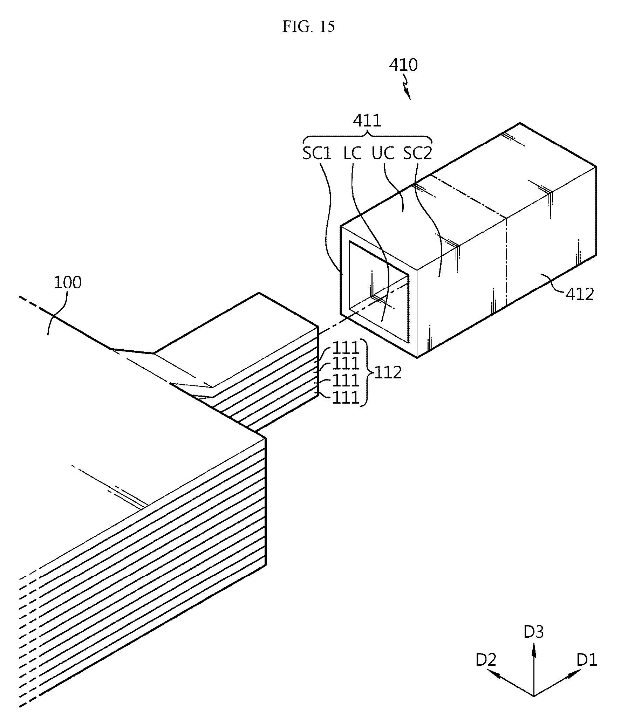

FIG. 15 is a perspective view for describing a first electrode lead included in a battery cell according to still another embodiment of the present disclosure.

Referring to FIG. 15, the first electrode lead 410 may include a first lead coupling portion 411 and a first extension portion 412. The first lead coupling portion 411 may be formed to surround at least a portion of the negative electrode tab stacking portion 112, thereby contacting the negative electrode tab stacking portion 112. The first lead coupling portion 411 may have a shape protruding from the side surface of the first extension portion 412. The first extension portion 412 may extend from the first lead coupling portion 411 to lead the negative electrodes 110 to the outside of the battery cell.

In one embodiment, the first lead coupling portion 411 may include an upper contact portion UC, a first side contact portion SC1, a second side contact portion SC2, and a lower contact portion LC.

The upper contact portion UC may contact the upper surface USF of the negative electrode tab stacking portion 112. The first side contact portion SC1 may contact the first side surface SSF1 of the negative electrode tab stacking portion 112. The second side contact portion SC2 may contact the second side surface SSF2 of the negative electrode tab stacking portion 112. The lower contact portion LC may contact the lower surface LSF of the negative electrode tab stacking portion 112.

In addition, the first lead coupling portion 411 may expose a back surface BSF of the negative electrode tab stacking portion 112. In this case, the back surface BSF of the negative electrode tab stacking portion 112 exposed by the first lead coupling portion 411 may not face the positive electrode tab stacking portion 122, and accordingly, a short circuit may not occur between the negative electrode tab stacking portion 112 and surrounding electrodes (e.g., the positive electrode tab stacking portion 122).

That is, the first lead coupling portion 411 is in contact with the upper surface USF, first side surface SSF1, second side surface SSF2, and lower surface LSF of the negative electrode tab stacking portion 112, which can be referred to as a donut shape, and the contact area may increase compared to the conventional bonding area, thereby reducing resistance and maintaining improved bonding strength. The negative electrode tab stacking portion 112 may be placed inside the donut-shaped first lead coupling portion 411 to be welded under pressing. The space created by the upper contact portion UC, first side contact portion SC1, second side contact portion SC2, and lower contact portion LC of the first lead coupling portion 411 is larger than the volume of the negative electrode tab stacking portion 112, and thus when placing the negative electrode tab stacking portion 112 inside the first lead coupling portion 411, there is enough space for easy assembly. By reducing the space created by the upper contact portion UC, first side contact portion SC1, second side contact portion SC2, and lower contact portion LC of the first lead coupling portion 411 when welding under pressing, the contact and coupling between the first lead coupling portion 411 and the negative electrode tab stacking portion 112 may be strengthened.

Since the first lead coupling portion 411 exposes the back surface BSF of the negative electrode tab stacking portion 112 and surrounds the four surfaces of the negative electrode tab stacking portion 112, breakage of the negative electrode tab stacking portion 112 may be blocked during welding, thereby ensuring safety of the negative electrode tab. In addition, even if the negative electrode tab stacking portion 112 is pressed during welding, the first lead coupling portion 411 blocks contact with the surrounding electrodes, thereby preventing a short circuit with the surrounding electrodes.

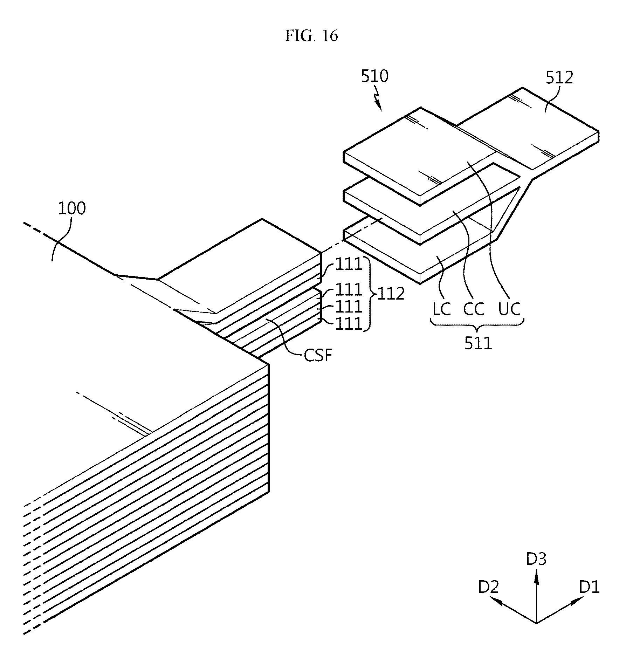

FIG. 16 is a perspective view for describing a first electrode lead included in a battery cell according to still another embodiment of the present disclosure.

Referring to FIG. 16, the first electrode lead 510 may include a first lead coupling portion 511 and a first extension portion 512. The first lead coupling portion 511 may be formed to surround at least a portion of the negative electrode tab stacking portion 112, thereby contacting the negative electrode tab stacking portion 112. The first lead coupling portion 511 may have a shape protruding from the side surface of the first extension portion 512. The first extension portion 512 may extend from the first lead coupling portion 511 to lead the negative electrodes 110 to the outside of the battery cell.

In one embodiment, the first lead coupling portion 511 may include an upper contact portion UC, a lower contact portion LC, and a center contact portion CC.

The upper contact portion UC may contact the upper surface USF of the negative electrode tab stacking portion 112. The lower contact portion LC may contact the lower surface LSF of the negative electrode tab stacking portion 112. In the negative electrode tab stacking portion 112, a center surface CSF located between the upper surface USF and the lower surface LSF and parallel to the upper surface USF and the lower surface LSF may be further defined, and the center contact portion CC may contact the center surface CSF. In other words, the center contact portion CC may be inserted into any one boundary of the stacked negative electrode tabs 111. Accordingly, the negative electrode tab stacking portion 112 and the first lead coupling portion 511 may be electrically connected more smoothly.

In addition, the first lead coupling portion 511 may expose the first side surface SSF1, second side surface SSF2, and back surface BSF of the negative electrode tab stacking portion 112.

The center contact portion CC may be inserted between the stacked negative electrode tabs 111, the upper contact portion UC and lower contact portion LC may be wrapped around the outermost portion of the negative electrode tab stacking portion 112, and then joint welding may be performed. The contact area may increase compared to the conventional bonding area, thereby reducing resistance and maintaining improved bonding strength. Since breakage of the negative electrode tab stacking portion 112 may be blocked during welding, safety of the negative electrode tab may be ensured. In addition, when the number of stacked negative electrode tabs 111 is large, the center contact portion CC included in the first lead coupling portion 511 of this embodiment may further prevent deintercalation.

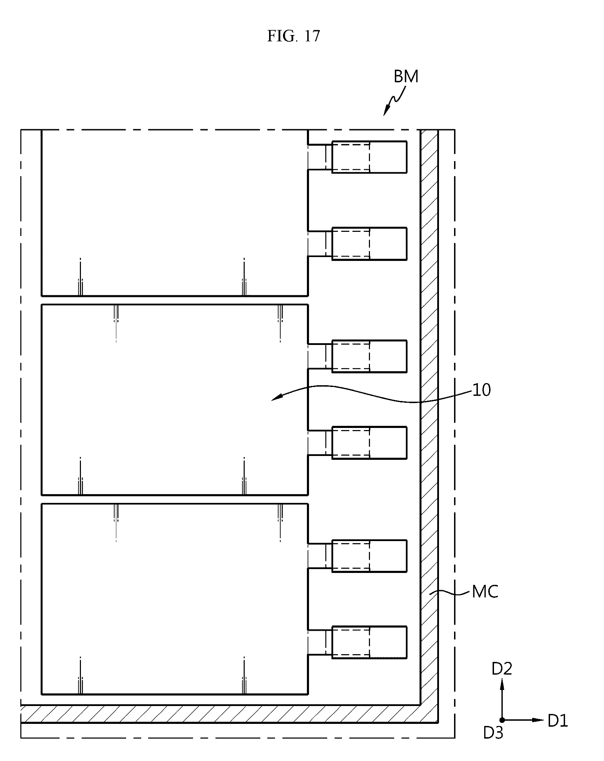

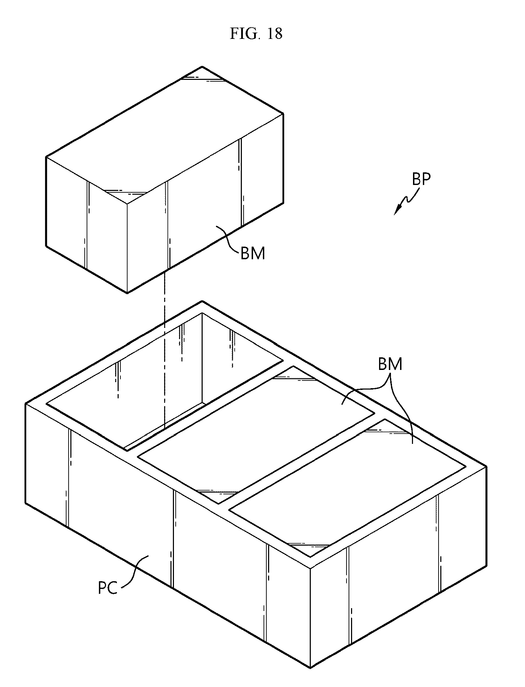

FIG. 17 is a view for describing a battery module including a battery cell according to an embodiment of the present disclosure, and FIG. 18 is a view for describing a battery pack including the battery module of FIG. 17.

Referring to FIG. 17, the battery module BM may include at least one battery cell described with reference to FIGS. 1 to 16 and a module case MC accommodating the battery cell.

While small mobile devices use one or two to four battery cells per device, medium/large devices such as vehicles require high output and large capacity. Therefore, a medium/large battery module including a cell stack in which a plurality of battery cells are electrically connected is used. The battery module BM manufactured by electrically connecting battery cells 10 may be used as such a medium/large battery module. Each battery cell 10 is connected to each other to secure the necessary power according to the purpose for which the power of the battery module BM is required.

Referring to FIG. 18, the battery pack BP may include at least one battery module BM described with reference to FIG. 17 and a pack case PC packaging the battery module BM.

The battery pack BP according to the present disclosure may further include various devices for controlling charge/discharge of the battery module BM, such as a battery management system (BMS), a current sensor, a fuse, and the like. The BMS estimates the state of cells in the battery pack BP and manages the battery pack BP using the estimated state information. For example, the BMS estimates and manages the battery pack BP status information such as the state of charge (SOC), state of health (SOH), maximum input/output power allowance, and output voltage of the battery pack BP. In addition, using such status information, it is possible to control the charging or discharging of the battery pack BP, and furthermore, even to estimate the replacement time of the battery pack BP.

The battery module BM may have a substantially rectangular parallelepiped shape to be arranged in an orderly manner in the pack case PC, and each battery module BM is connected to each other to secure the necessary power according to the purpose for which the power of the battery pack BP is required.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

**[Explanation of reference signs]**

| | | | |
|---|---|---|---|
| 10, 10': | battery cell | 100: | electrode assembly |
| 110: | negative electrodes | 120: | positive electrodes |
| 111: | negative electrode tabs | 112: | negative electrode tab stacking portion |
| 210, 1210: | first electrode lead | 220: | second electrode lead |
| 211, 1211: | first lead coupling portion | 212, 1212: | first extension portion |

## Claims

1. A battery cell comprising:
an electrode assembly comprising electrodes and an electrode tab stacking portion in which electrode tabs protruding from the electrodes are aligned and stacked in the vertical direction; and
an electrode lead comprising a lead coupling portion surrounding at least a portion of the electrode tab stacking portion,
wherein the lead coupling portion continuously surrounds and contacts any one of an upper surface of the electrode tab stacking portion, a first side surface connected to the upper surface, a second side surface opposite to the first side surface, and a lower surface opposite to the upper surface, and the other one of the second side surface and the lower surface opposite to the upper surface is exposed.

2. The battery cell according to claim 1,
wherein the electrode tab stacking portion has a back surface defined as opposite to the protruding direction of the electrode tabs,
wherein the lead coupling portion exposes the back surface of the electrode tab stacking portion.

3. The battery cell according to claim 1,
wherein a width of the lead coupling portion in a direction perpendicular to the protruding direction of the electrode tabs is greater than a width of the electrode tab stacking portion in a direction perpendicular to the protruding direction of the electrode tabs.

4. The battery cell according to claim 1,
wherein a height of the lead coupling portion in the vertical direction is greater than a height of the electrode tab stacking portion in the vertical direction.

5. The battery cell according to claim 1,
wherein the electrode lead further comprises an extension portion extending from the lead coupling portion to lead the electrode to the outside of the battery cell,
wherein a width of the lead coupling portion in a direction perpendicular to the protruding direction of the electrode tabs is greater than a width of the extension portion in a direction perpendicular to the protruding direction of the electrode tabs.

6. The battery cell according to claim 5,
wherein the lead coupling portion is bent at a right angle at a corner portion where a surface of the electrode tab stacking portion is connected to another surface thereof to surround the at least a portion of the electrode tab stacking portion.

7. The battery cell according to claim 5,
wherein the lead coupling portion is bent into a curved shape at a corner portion where a surface of the electrode tab stacking portion is connected to another surface thereof to surround the at least a portion of the electrode tab stacking portion.

8. The battery cell according to claim 5,
wherein the lead coupling portion has a shape protruding from a side surface of the extension portion.

9. The battery cell according to claim 1,
wherein a rigidity of the lead coupling portion is greater than that of the electrode tabs.

10. The battery cell according to claim 9,
wherein each of the electrode tabs is made of lithium metal.

11. The battery cell according to claim 9,
wherein the lead coupling portion is made of a metal other than lithium metal.

12. The battery cell according to claim 1,
wherein the electrodes are negative electrodes, the electrode tabs are negative electrode tabs and made of lithium metal, and the electrode tab stacking portion is a negative electrode tab stacking portion,
wherein the electrode assembly further comprises positive electrodes with a separator interposed between each of the negative electrodes and a positive electrode tab stacking portion in which positive electrode tabs protruding from the positive electrodes are aligned and stacked in the vertical direction, and the positive electrode tabs are made of a metal other than lithium metal,
wherein the negative electrode tab stacking portion and the positive electrode tab stacking portion are formed parallel to each other on one side of the electrode assembly, and the second side surface or the lower surface of the negative electrode tab stacking portion exposed by the lead coupling portion does not face the positive electrode tab stacking portion.

13. The battery cell according to claim 12,
wherein a contact portion of the lead coupling portion and the negative electrode tab stacking portion is compressed so that the negative electrode tab stacking portion spreads while being restrained by the lead coupling portion.

14. A battery cell comprising:
an electrode assembly comprising electrodes and an electrode tab stacking portion in which electrode tabs protruding from the electrodes are aligned and stacked in a vertical direction; and
an electrode lead comprising a lead coupling portion surrounding at least a portion of the electrode tab stacking portion,
wherein the lead coupling portion exposes at least one of an upper surface of the electrode tab stacking portion, a first side surface connected to the upper surface, a second side surface opposite to the first side surface, a lower surface opposite to the upper surface, and a back surface connected to the lower surface and opposite to the protruding direction of the electrode tabs.

15. The battery cell according to claim 14,
wherein the lead coupling portion contacts the upper surface, the back surface, and the lower surface, and exposes the first side surface and the second side surface.

16. The battery cell according to claim 14,
wherein the lead coupling portion contacts the upper surface, the first side surface, the second side surface, and the lower surface, and exposes the back surface.

17. The battery cell according to claim 14,
wherein the electrode tab stacking portion has a center surface further defined as located between the upper surface and the lower surface and parallel to the upper surface and the lower surface,
wherein the lead coupling portion contacts the upper surface, the center surface, and the lower surface, and exposes the first side surface, the second side surface, and the back surface.

18. A battery module comprising at least one battery cell according to any one of claims 1 to 17; and a module case accommodating the at least one battery cell.

19. A battery pack comprising at least one battery module according to claim 18; and a pack case packaging the at least one battery module.
